# EUROPÄISCHE PATENTANMELDUNG

(11) **EP 1 048 334 A2**
(43) Veröffentlichungstag der Anmeldung: **02.11.2000**
(21) Anmeldenummer: 00810304.6
(22) Anmeldetag: 07.04.2000
(51) Int. Cl.: B01D 19/00

(54) **Vorrichtung zum Mischen und Entgasen einer fliessfähigen Masse**

(30) Priorität: 29.04.1999 DE 19919521
(71) Anmelder: MICAFIL AG, 8048 Zürich (CH)
(72) Erfinder: Gmeiner, Paul, 8966 Oberwil-Lieli (CH)
(74) Vertreter: Kaiser, Helmut, Dr.

(57) **Zusammenfassung**

Die Vorrichtung dient dem Mischen und Entgasen einer fliessfähigen Masse (5), insbesondere eines füllstoffenthaltenden Giessharzes. Sie weist einen zylinderförmig ausgebildeten, evakuierbaren Behälter (1) auf, dessen Behälterachse (2) im wesentlichen in vertikaler Richtung ausgerichtet ist. Längs der Behälterachse (2) geführt enthält sie ferner eine Rührorgane (8, 21) haltende Welle (12). Der Behälter (1) ist unterteilt in einen die zu entgasende Masse (5) lagernden, oberen Lagerbehälter (4), einen entgaste Masse (20) aufnehmenden unteren Pufferraum (19) sowie einen zwischen Lagerbehälter (4) und Pufferraum (19) angeordneten Durchlaufbehälter (6) mit einem Entgasungssystem, in dem die zu entgasende Masse (5) in Form dünner Schichten geführt ist. Das Dünnschicht-Entgasungssystem enthält mindestens zwei in axialer Richtung gegeneinander versetzt angeordnete, konusförmig ausgebildete Ablaufflächen (15, 16). Die Ablaufflächen sind gegenläufig geneigt angeordnet. Dadurch fliesst die zu entgasende Masse (5) zwischen Welle (12) und Wand des Behälters (1) gravimetrisch zunächst von innen nach aussen und dann von aussen nach innen. Durch diese lange Fliessstrecke wird die Entgasung der Masse (5) erheblich gefördert.

Durch knapp oberhalb der Ablaufflächen (15, 16) angeordnete und als Rührorgane ausgebildete Abstreifelemente (17, 18) werden die von der Masse (5) gebildeten, dünnen Schichten geglättet und durchmischt und so die Entgasung und die Durchmischung der Masse (5) zusätzlich gefördert.

## Beschreibung

### TECHNISCHES GEBIET

Bei der Erfindung wird ausgegangen von einer Vorrichtung zum Mischen und Entgasen einer fliessfähigen Masse nach dem Oberbegriff von Patentanspruch 1.

Eine solche Vorrichtung dient dem Aufbereiten einer giessfähigen Masse unmittelbar bevor die Masse in einer Giessapparatur in Formen abgegossen wird. In dieser Vorrichtung wird die Masse wirkungsvoll entgast und durchmischt. Unerwünschte Gaseinschlüsse in der zu vergiessenden Masse und ein Entmischen der Masse, beispielsweise eine Sedimentation in einem füllstoffenthaltenden Giessharz, werden so vermieden.

### STAND DER TECHNIK

Eine Misch- und Entgasungsvorrichtung der vorgenannten Art ist in der nicht vorveröffentlichten deutschen Patentanmeldung 19 823 232 A1 beschrieben. Diese , Vorrichtung weist einen zylinderförmig ausgebildeten, evakuierbaren Behälter auf, dessen Behälterachse im wesentlichen in vertikaler Richtung ausgerichtet ist, sowie eine längs der Behälterachse geführte Welle mit Rührarmen und einem Verteilteller. Eine fliessfähige, gashaltige Masse, beispielsweise ein füllstoffenthaltendes Giessharz, wird in dieser Vorrichtung unter der Wirkung der Schwerkraft und unter Rühren von einem oben liegenden Lagerraum über ein das Gas aus der fliessfähigen Masse entfernendes Dünnschicht-Entgasungssystem in einen am Boden des Behälters vorgesehenen Pufferraum geführt, in dem die entgaste Masse unter Rühren vorübergehend gelagert wird. Zum Entgasen wird die fliessfähige Masse zunächst in Form dünnerSchichten über den sich drehenden Verteilteller geführt und von dort über geeignet angeordnete Leitbleche und Schlitze an Heizspiralen des Dünnschicht-Entgasungsystems weitergeleitet. Da die zu entgasende Masse überwiegend in vertikaler Richtung und zudem in ungleich dicken Schichten durch das Entgasungssystem fliesst, ist nicht auszuschliessen, dass die Entgasung ungleichmässig erfolgt.

### KURZE DARSTELLUNG DER ERFINDUNG

Der Erfindung, wie sie in den Patentansprüchen definiert ist, liegt die Aufgabe zugrunde, eine Vorrichtung der eingangs genannten Art derart weiterzubilden, dass die damit erzeugte entgaste Masse sich durch eine grosse Homogenität auszeichnet.

Bei der Misch- und Entgasungsvorrichtung nach der Erfindung fliesst die zu entgasende Masse überwiegend in dünnen Schichten und überwiegend mit konstanter Geschwindigkeit von oben nach unten durch das Dünnschicht-Entgasungsystem. Dadurch, und da die Verweilzeit der zu entgasenden Masse im Dünnschicht-Entgasungsystem durch Anzahl und Neigung von konischen Ablaufflächen weitgehend modifiziert werden kann, wird so eine äusserst homogene entgaste Masse erzeugt. Durch Umlenken der zu entgasenden Masse an den Enden der konischen Ablaufflächen variieren die Schichten jeweils in ihrer Dicke. Dies führt zu natürlicher Schichtumwälzung und fördert die Homogenität der entgasten Masse wesentlich.

Von besonderem Vorteil ist es, wenn das Dünnschicht-Entgasungssystem mindestens ein knapp oberhalb einer der beiden Ablaufflächen angeordnetes Abstreifelement aufweist. Dieses Abstreifelement stellt zum einen eine gleichmässig dicke Massenschicht her. Diese Schicht kann selbst für hochviskosen Massen rasch und sicher entgast werden. Zum anderen verwirbelt das Abstreifelement hierbei durch Glätten und Abstreifen die zu entgasende Masse intensiv und sorgt so dafür, dass die Komponenten der Masse gut vermischt bleiben. Jegliche Sedimentation der Masse auch während langer Verweilzeiten im Dünnschicht-Entgasungssystem wird Masse auch während langer Verweilzeiten im Dünnschicht-Entgasungssystem wird so vermieden. Zugleich ist durch das auch als Rührorgan wirkende Abstreifelement wegen der turbulenten Durchmischung eine schnelle Erwärmung, d. h. ein rascher Wärmeübergang von der heizbaren Ablauffläche auf die Massenschicht, sichergestellt. Da praktisch nur dünne Schichten entgast werden, wird vermieden, dass sich während des Entgasens gut entgaste und eher weniger gut entgaste Masse vermischen und wird so eine für die Weiterverarbeitung besonders vorteilhafte homogene Masse gebildet.

### KURZE BESCHREIBUNG DER ZEICHNUNGEN

Diese und weitere Vorteile der Erfindung werden nachfolgend anhand einer Zeichnung näher erläutert. Hierbei zeigt die einzige Figur eine Aufsicht auf einen axial geführten Schnitt durch einen zylinderförmig ausgebildeten Behälter einer Misch- und Entgasungsvorrichtung nach der Erfindung.

### WEG ZUR AUSFÜHRUNG DER ERFINDUNG

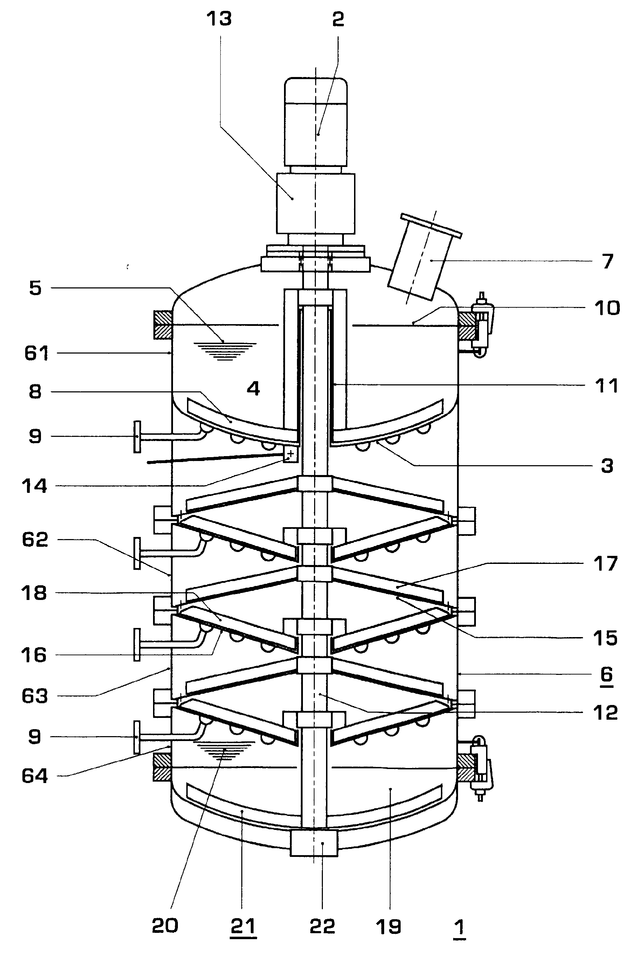

Die in Fig.1 dargestellte Misch- und Entgasungsvorrichtung weist einen zylinderförmig ausgebildeten, evakuierbaren Behälter 1 auf, dessen Behälterachse 2 im wesentlichen in vertikaler Richtung ausgerichtet ist. Dieser Behälter ist durch eine Trennwand 3 unterteilt in einen Lagerbehälter 4 für zu entgasende, fliessfähige Masse 5, wie etwa eine Mischung zweier füllstofffreier oder füllstoffenthaltender Flüssigkeiten, beispielsweise eine reaktive füllstoffenthaltende Giessharzmasse, und , einen Durchlaufbehälter 6 zur Aufbereitung dieser Masse durch Entgasen und Mischen. Die Masse 5 wird über einen Einlass 7 in den Lagerbehälter 4 eingebracht. Mit Hilfe von jeweils als Arm ausgebildeten Rührorganen 8 wird die in den Lagerbehälter 4 eingebrachte Masse durchmischt und mit Hilfe einer Heiz- und Kühlvorrichtung 9 erwärmt oder gekühlt. Zu diesem Zweck sind in koaxialer Anordnung zwei, drei oder noch mehr Heiz- bzw. Heiz- und Kühlspiralen mit in axialer Richtung voneinander beabstandeten Rohrwindungen unmittelbar unter der Trennwand 3 angeordnet. Diese Spiralen werden von einem nicht bezeichneten Wärmeerzeuger mit Energie versorgt. In der als Boden des Lagerbehälters 4 wirkenden Trennwand 3 ist gegebenenfalls flüssigkeits- und/oder gasdicht ein längs der Behälterachse 2 in den Lagerbehälter 4 geführter und oberhalb des Niveaus 10 der zu entgasenden Masse 5 endender Rohrabschnitt 11 eingeformt. Der Rohrabschnitt 11 kann als Lager einer auf der Behälterachse 2 geführten Welle 12 ausgebildet sein, welche von aussen in den Behälter 1 geführt und von einem auf einem Deckel des Behälter 1 angeordneten und daher leicht zugänglichen Antrieb 13 angetrieben wird. Der zwischen der Wand des Behälters 1 und dem Rohrabschnitt 11 angeordnete Teil des Bodens 3 des Lagerbehälters 4 ist von aussen nach innen vertieft ausgebildet und weist an einer an den Rohrabschnitt 11 angrenzenden tiefsten Stelle eine steuerbare Öffnung 14 zum Abziehen von zu entgasender Masse 5 auf. Die Rührorgane 8 sind direkt an der Welle 12 befestigt und bis dicht an den Boden 3 und die Aussenwand des Lagerbehälters 4 geführt, wodurch eine gute Durchmischung der zu entgasenden, fliessfähigen Masse 5 sichergestellt ist und deren Sedimentation zugleich verhindert wird.

Der Behälter 1 ist in seinem den Durchlaufbehälter 6 bildenden Abschnitt mehrteilig ausgeführt und enthält dort vier miteinander verflanschte hohlzylindrische Behälterabschnitte 61, 62, 63 und 64. An zwei zusammenwirkenden Flanschen zweier aufeinanderfolgender dieser Behälterabschnitte, z. B. 61 und 62, ist jeweils eines von zwei trichterförmigen Blechen befestigt. Die beiden Bleche sind gegenläufig geneigt und in axialer Richtung gegeneinander versetzt angeordnet. Sie weisen jeweils eine konusförmig ausgebildete Ablauffläche 15 bzw. 16 auf. Ausgehend von der Welle 12 ist die Ablauffläche 15 konisch nach aussen geneigt, derart, dass die zu entgasende Masse unter dem Einfluss der Schwerkraft nach aussen zur Wand des Behälters 1 geführt wird. In den Aussenrand des zugeordneten Blechs sind aus der Figur nicht ersichtliche Schlitze eingeformt. Die zur Wand strömende Masse wird vor Erreichen der Wand durch diese Schlitze hindurch auf das darunterliegende Blech geführt. Die Ablauffläche 16 dieses Blechs ist gegenläufig zur Ablauffläche 15, d. h. von aussen nach innen, geneigt. Die durch die Schlitze aus dem darüberliegenden Blech zugeführte Masse wird daher auf der Auflagefläche 16 von aussen nach innen geführt und am Innenrand oder über im Bereich des Innenrands in das zugeordnete Blech eingeformte Schlitze auf das darunterliegende, nicht bezeichnete Blech geführt. Dieses Blech und drei darunterliegende, aus Gründen der Übersichtlickeit nicht bezeichnete weitere Bleche sind entsprechend den zuvor beschriebenen beiden Blechen ausgebildet.

Entsprechend der Trennwand 3 können auch einige der Bleche, beispielsweise das die Ablauffläche 16 bildende Blech, beheizt oder gekühlt werden.

An der Welle 12 sind jeweils als Rührarm ausgebildete Abstreifelemente befestigt, von denen aus Gründen der Übersichtlichkeit nur die Abstreifelemente 17 bzw. 18 bezeichnet sind. Diese Abstreifelemente sind jeweils knapp über einer der Ablaufflächen, beispielsweise 15 bzw. 16, angeordnet.

An den Durchlaufbehälter 6 schliesst sich nach unten ein Pufferraum 19 an, in dem Masse 20 gepuffert wird, welche im Durchlaufbehälter 6 entgast worden ist.

Am einem im Pufferraum 19 befindlichen freien Ende der Welle 12 sind jeweils als Arm ausgebildete Rührorgane 21 befestigt, welche in den Bodenbereich des Pufferraums geführt sind und für eine gute Durchmischung der entgasten Masse 20 sorgen. Im Bodenbereich des Pufferraums 19 ist ein axialsymmetrisch aus dem Behälter 1 geführter Stutzen 22 zum Auslassen der entgasten und durchmischten Masse 20 angeordnet.

Die Wirkungsweise dieser Misch- und Entgasungsvorrichtung ist wie folgt: Im Lagerbehälter 4 gespeicherte und gegebenenfalls gekühlte Masse 5 wird mittels der Heiz- und Kühlvorrichtung 9 auf eine Temperatur erwärmt, bei der sie eine relativ geringe Zähigkeit aufweist und gut fliessfähig ist. Nach Einschalten des Antriebs 13 werden die Welle 12 und damit auch die Rührorgane 8 und 21 und die Abstreifelemente, beispielsweise 17, 18, um die Behälterachse 2 gedreht. Die Rührorgane 8 homogenisieren nun die zu entgasende Masse 5. Der die Welle 12 führende Rohrabschnitt 11 befindet sich stets oberhalb des Niveaus 10 der zu entgasenden, fliessfähigen Masse 5. Hierdurch ist sichergestellt, dass das die Welle 12 im Rohrabschnitt 11 führende Lager dem Zugriff der gebenenfalls chemisch aggressiven Masse 5 entzogen ist.

Die fliessfähige Masse 5 wird über die steuerbare Öffnung 14 in den Durchlaufbehälter 6 geführt. Herrscht ober- und unterhalb der Trennwand 3 der gleiche Druck, beispielsweise atmosphärischer Druck oder Unterdruck, so wird die Masse durch die Schwerkraft bewegt. Herrscht im Durchlaufbehälter Unterdruck und im Lagerbehälter atmosphärischer Druck (vakuumfestes Lager), so wird die Masse zusätzlich durch die Druckdifferenz in den Durchlaufbehälter 6 gepresst. Die aus der Öffnung 14 austretende Masse 5 trifft unweit der Welle 12 auf die Ablauffläche 15. Die Temperatur der Masse und entsprechend auch die Temperatur des Inneren des Durchlaufbehälters 6 sind derart eingestellt, dass die Masse 5 in Form dünner Schichten über die Ablauffläche 15 von innen nach aussen fliesst. Beim Abfliessen nach aussen variieren die Schichten in ihrer Dicke, was zu natürlicher Schichtenumwälzung führt und damit die Durchmischung fördert. Zugleich wird die zu entgasende Masse beim Abfliessen auf der gesamten Ablauffläche verteilt. Das von der Welle 12 gedrehte Abstreifelement 17 sorgt dafür, dass zum einen durch Glätten eine gleichmässig dünne Schicht aus zu entgasender Masse gebildet wird, und dass zum anderen durch Abstreifen und durch tangentiale Bewegung die Durchwirbelung der Masse drastisch verbessert und deren Schergeschwindigkeit wesentlich erhöht wird. Hierdurch werden die Entgasung und zugleich auch die Durchmischung zusätzlich forciert.

Sobald die dünne Massenschicht den Aussenrand oder die im Bereich des Aussenrandes gelegenen Schlitze der Ablauffläche 15 erreicht hat, verlässt die Masse diese Ablauffläche und fliesst über den Rand bzw. durch die Schlitze auf die darunterliegende Ablauffläche 16, auf der sie nun unter der Wirkung der Schwerkraft von aussen nach innen geführt und durch das Abstreifelement 18 in entsprechender Weise wie auf dem darüberliegenden Blech geglättet und gemischt wird. Da die Masse so sukzessive alle Ablaufflächen durchläuft, wird auf engem Raum eine äusserst starke Entgasung der Masse 5 unter permanentem Mischen erreicht.

Von Vorteil ist es, die Abstreifelemente 17, 18 in axialer Richtung verstellbar auszuführen, da dann sehr bequem der Abstand zwischen Ablauffläche und zugeordnetem Abstreifelement verändert und damit eine vorbestimmte Schichtdicke eingestellt werden kann.

Die entgaste, homogenisierte Masse 20 wird im Pufferraum 19 gesammelt und mit den Rührorganen 21 vor allem im Bodenbereich des Pufferraums 19 gerührt, um so deren Sedimentation wirksam zu verhindern. Die Masse 20 kann bei Bedarf über den Auslassstutzen 22 einer Giessapparatur zugeführt werden.

Die Abstreifelemente 17, 18 müssen nicht alle an der Welle 12 und die die Ablaufflächen 15, 16 bildenden Bleche müssen nicht alle an den Flanschen der Behälterabschnitte 61 bis 64 befestigt sein. Es ist auch möglich, dass das die Ablauffläche 16 bildende Blech an dem einen Teil der Wand des Behälters 1 bildenden Behälterabschnitt 62 oder der Welle 12 befestigt ist, und dass das Abstreifelement 18 sowie das darüberliegende und die Ablauffläche 15 bildende Blech relativ dazu beweglich an der Welle 12 oder an einem Flansch des Behälterabschnitts 61 befestigt sind. Ferner ist es auch möglich, dass alle Abstreifelemente 17, 18 an den Flanschen der Behälterabschnitte 61 bis 64 und alle Bleche an der Welle 12 befestigt sind.

### BEZUGSZEICHENLISTE

- 1: Behälter
- 2: Behälterachse
- 3: Trennwand, Boden
- 4: Lagerbehälter
- 5: zu entgasende Masse
- 6: Durchlaufbehälter
- 7: Einlass
- 8: Rührorgane
- 9: Heiz- und Kühlvorrichtung
- 10: Niveau
- 11: Rohrabschnitt
- 12: Welle
- 13: Antrieb
- 14: Öffnung
- 15, 16: Ablaufflächen
- 17, 18: Abstreifelemente
- 19: Pufferraum
- 20: entgaste Masse
- 21: Rührorgane
- 22: Stutzen
- 61, 61, 63, 64: Behälterabschnitte

## Patentansprüche

1. Vorrichtung zum Mischen und Entgasen einer fliessfähigen Masse (5), insbesondere eines füllstoffenthaltenden Giessharzes, mit einem zylinderförmig ausgebildeten, evakuierbaren Behälter (1), dessen Behälterachse (2) im wesentlichen in vertikaler Richtung ausgerichtet ist, und mit einer längs der Behälterachse (2) geführten und Rührorgane (8, 17, 18, 21) haltenden Welle (12), bei der der Behälter (1) einen die zu entgasende Masse (5) lagernden oberen Teilbehälter (4) und einen entgaste Masse (20) puffernden unteren Raum (19) aufweist sowie einen zwischen Lagerbehälter (4) und Pufferraum (19) angeordneten Durchlaufbehälter (6) mit einem Entgasungssystem, in dem die zu entgasende Masse (5) in Form einer dünnen Schicht geführt ist, dadurch gekennzeichnet, dass das Dünnschicht-Entgasungssystem mindestens zwei in axialer Richtung gegeneinander versetzt angeordnete, konusförmig ausgebildete Ablaufflächen (15, 16) aufweist, welche derart gegenläufig geneigt angeordnet sind, dass die zu entgasende Masse (5) zwischen Welle (12) und Behälterwand gravimetrisch zunächst von innen nach aussen und dann von aussen nach innen oder zunächst von aussen nach innen und dann von innen nach aussen fliesst.

2. Vorrichtung nach Anspruch 1, dadurch gekennzeichnet, dass das Dünnschicht-Entgasungssystem mindestens ein knapp oberhalb einer ersten der beiden Ablaufflächen (15, 16) angeordnetes und als Rührarm ausgebildetes Abstreifelement (17, 18) aufweist.

3. Vorrichtung nach Anspruch 2, dadurch gekennzeichnet, dass das Abstreifelement (17, 18) an der Welle (12) und zwei die beiden Ablaufflächen (15, 16) bildende Bleche an der Wand des Behälters (1) befestigt sind.

4. Vorrichtung nach einem der Ansprüche 2 oder 3, dadurch gekennzeichnet, dass das Abstreifelement (17, 18) in axialer Richtung verstellbar ist.

5. Vorrichtung nach einem der Ansprüche 1 bis 4, dadurch gekennzeichnet, dass mindestens eines der die beiden Ablaufflächen (15, 16) bildenden Bleche zumindest zum Teil heiz- und/oder kühlbar ist.

6. Vorrichtung nach einem der Ansprüche 1 bis 5, dadurch gekennzeichnet, dass der Behälter (1) mehrteilig ausgeführt ist und mindestens zwei miteinander verflanschte, hohlzylindrische Behälterabschnitte (61, 62, 63, 64) aufweist, und dass an den beiden zusammenwirkenden Flanschen dieser beiden Behälterabschnitte (61, 62) jeweils eines der die beiden Ablaufflächen (15, 16) bildenden Bleche befestigt ist.
